Europäisches Patentamt

European Patent Office

Office européen des brevets

(11) Publication number: **0 037 615**
**B1**

(12) EUROPEAN PATENT SPECIFICATION

(45) Date of publication of patent specification: 21.08.85

(51) Int. Cl.⁴: **E 04 B 5/55, H 02 G 3/26**

(21) Application number: **81200378.8**

(22) Date of filing: **02.04.81**

(54) Suspended ceiling and coupling element for the same.

(30) Priority: **03.04.80 NL 8002018**

(43) Date of publication of application:
**14.10.81 Bulletin 81/41**

(45) Publication of the grant of the patent:
**21.08.85 Bulletin 85/34**

(84) Designated Contracting States:
**AT BE CH DE FR GB IT LI LU NL SE**

(56) References cited:
**CA-A- 527 121**
**DE-A-2 363 908**
**FR-A-1 521 672**
**FR-A-2 036 445**
**FR-A-2 086 197**
**GB-A- 866 623**
**NL-A-6 905 984**
**US-A-3 742 674**

(73) Proprietor: **Nemaco Trading Ltd.**
**P.O. Box 255**
**St. Helier, Jersey Channel Islands (GB)**

(72) Inventor: **Smits, Johan Gerhard**
**22, Dovenetelhof**
**NL-3742 EH Baarn (NL)**
Inventor: **de Weerd, Johan Anton Theo**
**20, Torenlaan**
**NL-1261 GD Blaricum (NL)**
Inventor: **Vuyk, Cor Karel**
**28, Schans**
**NL-1261 MK Blaricum (NL)**

(74) Representative: **Konings, Lucien Marie Cornelis**
**Joseph et al**
**OCTROOIBUREAU ARNOLD & SIEDSMA**
**Sweelinckplein 1**
**NL-2517 GK Den Haag (NL)**

Courier Press, Leamington Spa, England.

## Description

The invention relates to a suspended ceiling as described in the preamble of claim 1.

Such a suspended ceiling is known from the catalogue of the firm Maars B.V. of Deventer/Harderwijk, the Netherlands with title: "Blow Line Lineaire luchtverdeler." In said known suspended ceiling the connection between coupling element and carrier girder is obtained by twisting the tab passed through a vertical slot from a vertical into a horizontal position by means of a tool. The tab may be slipped from said slot before one succeeds in twisting the tab. Further this method of connecting requires an additional tool, which one should have in hand in time. Furthermore, during the twisting operation one should keep the element in the required related position. The carrier girders to be connected are not kept in their required related position. Resuming the above, one may say that this method of interconnecting is cumbersome.

Another type of suspended ceiling of the kind of the preamble of claim 1 is disclosed in the catalogue of CMC with title "Lineair 130 systeem", page 16. There the tab passed through a carrier girder is connected to the girder by passing the two legs of a hair pin at either sides of the carrier girder through small remaining apertures of the tab. Finding these small apertures is very cumbersome, particularly when standing on a ladder or like.

The invention provides a suspended ceiling of the kind having a simple connection between coupling element and carrier girders. This suspended ceiling is described in claim 1.

Besides the simplicity and mounting velocity, the application of the invention has the additional advantage that the tab of the coupling element together with the tab of a transverse girder can be passed through one and the same vertical slot of a carrier girder, resulting in a continuous straight series of elements loaded on pressure or tension in line, viz. transverse girders and coupling elements, which provides a rigid ceiling grid.

It is noted that the above mentioned catalogues each disclose transverse girders having tabs with hooks at their free ends which are passed through vertical slots of the carrier girders. In fact the invention proposes to use preferably identical tabs at the sides of the limbs of the coupling element, so that the coupling elements can be used in combination with carrier girders having vertical slots, which are available on the market and which are also disclosed in FR—A—1.521.672.

Preferably the limbs of each coupling element have on the inner sides a recess for receiving flanges of a service line channel for an electrical service cable, particularly a ribbon cable, said flanges engaging by spring action in the recesses of the limbs of the coupling element.

It will furthermore serve as a mounting element for the electric wiring system, whereby plugs and other protruding elements remain inside the service line channel, where they are withdrawn from sight preferably by a cover strip arranged in the plane of the ceiling. The service line channel can be mounted in a simple way when at least one limb has an inclined rim on the inner side beneath a recess receiving a flange of the service line channel.

The carrier girders bounding the service line channel are relatively better fixed in an axial direction, when the coupling element is provided with two pairs of abutments protruding laterally from the plane of the plate of the coupling element in opposite directions.

In order to form one or more additional line channels the coupling element is preferably provided with at least one supporting service line supporting flange bent into the horizontal plane, said flange being suitable for supporting further service lines.

When the service line channel can also be fastened in an inverted position between the limbs of the coupling element, ducts can be optionally inserted from the upper or the lower side into the service line channel. For that matter, a cable may emerge at the top or at the bottom from between the service line channel and the carrier girder from a plug provided on the bottom or top side of the service line channel.

The invention relates to and provides furthermore a coupling element intended for use in a ceiling according to the invention, which is described in claim 9.

It should be noted that a plate-shaped coupling suspension element is known from German Patent Application DE—A—2363908 for suspending a substantially U-shaped profile, in which two tabs engage the two flanges of one and the same U-profile. The plate-shaped coupling element also has the shape of a runner. The channel formed between the limbs is not intended for use as a line channel and not usable as such, because there is no access from the lower side. This channel is shut off by the web of this U-shaped profile. This coupling element does not engage the flanges by means of noses extending through vertical slots, in constrast they grip around bent-over rims of the flanges.

French patent application FR—A—2,086,197 describes a U-shaped coupling element which couples two carrier girders bounding a service line channel with one another in a ceiling grating, whilst also other elements are employed for completing the coupling. This known coupling structure is complicated and cannot be easily mounted.

The above mentioned and further features of the invention will be described more fully in the following description with reference to a drawing.

The drawing shows in:

Figure 1 a perspective plan view of part of an embodiment of a suspended ceiling in accordance with the invention,

Figure 2 an enlarged sectional view taken on the line II—II in Figure 1,

Figure 3 a perspective view of the detail shown in Figure 2,

Figure 4 on an enlarged scale detail IV of Figure 3, and

Figure 5 an elevational view corresponding to Figure 2 of a further variant.

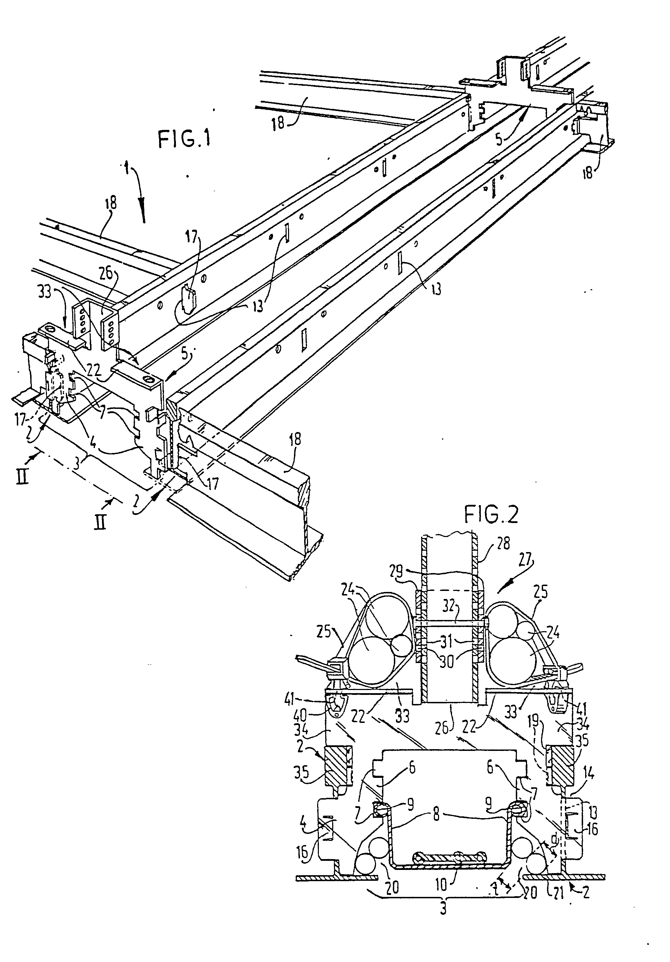

The suspended ceiling 1 of Figure 1 comprises a grating of a plurality of relatively spaced, parallel carrier girders 2, only two of which are shown, said two forming a pair providing between them a space 3 for accommodating a service line channel for technical supply lines for example, electric conductors, low-voltage conductors for communication purposes, air and/or gas ducts. The carrier girders 2 of said pair are intercoupled by means of runnershaped coupling elements 5 accommodating the channel shaped space 3 between their limbs 4. The limbs 4 of each coupling element 5 have on the inner side 6 recesses 7 for receiving the bead rim of a flange 9 of a service line channel 8 in which a ribbon cable 10 is arranged. The flanges 9 are elastically flexible and their bead rims resiliently snap into opposite recesses 7 in the limbs 4. Each inclined rim 12 beneath the recesses 7 constitutes an orientating guide form facilitating mounting of the channel 8 in the coupling elements 5.

The channel 8 may be provided with welding boxes and contact boxes optionally accessible from above or below.

Each limb 4 is provided with a tab 14 passed through a slot 13 of a carrier girder 2. Each tab 14 has a retention hook in the form of a tang 16 bent out of its plane and hooking behind the web 15 of the carrier girder 2, said hook being rigidly locked when the tab 14 of a coupling element 5 can be passed through one and the same slot 13 of a carrier girder 2 as well as a tab 17 protruding from the other side of the web 15 of a transverse girder 18.

The coupling element 5 is provided with two pairs of bent-over supporting tags bearing on carrier girders and protruding pairwise from the coupling element 5 in opposite axial directions of the carrier girder 2. These supporting tags 19 prevent relative axial displacements of the carrier girders intercoupled by the coupling elements 5.

Figure 2 shows an uninterrupted, axial space on each side of the channel 8, which space is bounded by the locally bevelled limbs 4. This space 20 may accommodate for example, telephone lines 23 having elastic sheaths of a diameter $d$ slightly exceeding the passage $t$ between the ribbon cable 10 and the flange 21 of the carrier girder 2.

Each coupling element 5 is preferably provided with two supporting consoles 22 on the top side of the coupling element, said consoles being bent over into the horizontal plane. All kinds of lines 24 not allowed to bear on a sharp edge may be deposited on said consoles. These consoles 22 each constitute the bottom of a space of a service line channel 33, which is furthermore bounded by a head 26 provided with suspension means 27 for a hanger 28 by which the coupling element 5 may be suspended from a ceiling of a building construction. Said head 26 has two bent-over flanges 29 having fastening holes 30, which together with a series of fastening holes 31 of the hanger 28 constitute a vernier, so that the coupling element 5 can be readily suspended at any height from the hanger 28 by means of a pin 32 passed through registering holes 30 and 31. The holes 30 are located at a slightly smaller pitch distance from one another than the holes 31. The line channel 33 is furthermore bounded by known slings 25 bundling the lines 24 and extending each with an elastic, hooking foot 40 through a hole 41 of a supporting console 22. By projecting arms 34 the coupling element 5 bears on the heads 35 of carrier girders 2, which may be made from sprayed aluminium or from curved sheet material.

The coupling elements 5 according to the invention ensure a strong connection between the carrier girders 2 and provide, in addition, the space required for all kinds of service lines between the intercoupled T-section carrier girders 2 spaced apart by the size of a line channel. The carrier girders 2 and the transverse girders 18 are capable of carrying ceilings slabs (not shown).

Since the pair of carrier girders 2 are firmly fixed in their relative positions, the pair is eminently suitable for use as a carrier for apparatus such as air inlet and outlet casings, loud speakers, lightning fittings and as supports for separating partitions and technical columns.

The service line channel space 3 or the space between two carrier girders 2 can be screened by a strip 36 of elastic material.

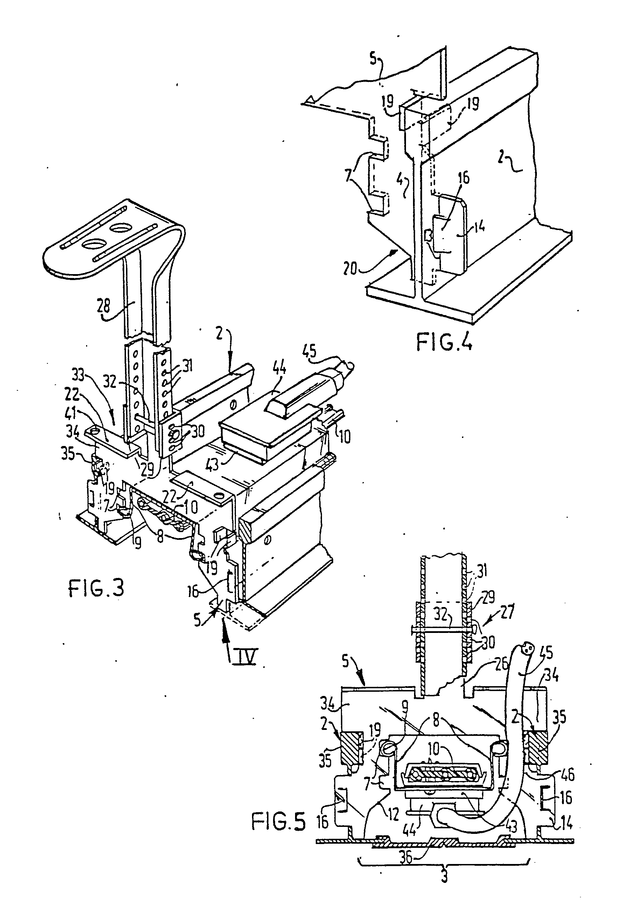

Referring to Figure 3 the gutter 8 is mounted in an inverted position Figures 3 and 5 show the ribbon cable 10 with a contact box 43 and a plug 44 arranged in the channel 8, the cable 45 passing the free space 46 between the channel 8 and the carrier girder 2 downwards and upwards respectively in a vertical sense across the channel 8.

The coupling element as described above serves both as the intercoupling to carrier girders 2 and as the suspension of the ceiling to an above lying construction e.g. building structure, ceiling. Moreover, the coupling element serves as a fastening element, which fastens the channel 8 to the carrier girders.

**Claims**

1. A suspended ceiling (1) comprising a grating of spaced, parallel carrier girders (2), the carrier girders (2) including at least one pair interconnected by means of coupling means, said coupling means comprising coupling elements (5) each consisting of a plate having a pair of limbs (4) which are spaced transversely and bound a space suitable for accommodating at least one service line therebetween, said limbs (4) engaging the sides of the carrier girders (2), and said limbs (4) each comprising a tab (14) protruding laterally thereof and each passing through a vertical slot (13) of a carrier girder (2); characterised in that each tab (14) is provided with a retention hook (16) connected to said tab (14), said retention hook (16) engaging the latter carrier girder (2) on the side facing away from the respective limb (4) and by a pair of abutments on each of the limbs (4) protruding laterally from the plane of the plate of the coupling element (5) in opposite directions.

2. A suspended ceiling (1) as claimed in claim 1, characterised in that the limbs (4) of each coupling element (5) have on the inner sides a recess (7) for receiving flanges (9) of a service line channel (8) for an electrical service cable, particularly a ribbon cable (10), said flanges (9) engaging by spring action in the recesses of the limbs (4) of the coupling element (5).

3. A suspended ceiling (1) as claimed in claim 2, characterised in that at least one limb (4) has on the inner edge an inclined part (12) below the recess (7) for receiving a flange (9) of the service line channel (8).

4. A suspended ceiling (1) as claimed in any one of the preceding claims 1, 2 or 3, characterised in that the tab (14) has at least one tang (16) bent out of its plane, said tang (16) constituting said retention hook.

5. A suspended ceiling (1) as claimed in any one of the preceding claims, characterised in that the coupling element (5) is provided with at least one supporting service line supporting flange (22) bent into the horizontal plane, said flange being suitable for supporting further service lines.

6. A suspended ceiling (1) as claimed in any one of claims 2 to 5, characterised in that a narrow gap (t) is provided between the service line channel (8) and a carrier girder (2), said gap (t) giving access to a service line space bounded by a limb (4) of the coupling element (5) and which is uninterrupted in a longitudinal direction.

7. A suspended ceiling (1) as claimed in any one of the preceding claims, characterised in that the coupling element (5) has a head (26) provided with connection means (32) for a hanger (28).

8. A suspended ceiling (1) as claimed in any one of claims 2—7, characterised in that the service line channel (8) can also be fastened in an inverted position between the limbs (4) of the coupling element (5).

9. A coupling element (5) for use in a suspended ceiling (1) as claimed in claim 1, consisting of a plate having a pair of limbs (4) which are spaced transversely and bound a space suitable for accommodating at least one service line therebetween, said limbs (4) having side edges for engaging sides of carrier girders (2), and said limbs (4) each comprising a tab (14) protruding laterally thereof and being suitable to pass through a vertical slot (13) of a carrier girder (2), characterised in that each tab (14) is provided with at least one retention hook (16) for locking a carrier girder (2) to the coupling element (5), and by a pair of abutments (19) on each of the limbs (4) protruding laterally from the plane of the plate of the coupling element (5) in opposite directions.

## Revendications

1. Plafond suspendu (1) comprenant un réseau de poutres porteuses parallèles et espacées (2), les poutres porteuses (2) comprenant au moins une paire de poutres qui est interconnectée à l'aide de moyens d'accouplement, ces moyens d'accouplement comprenant des éléments d'accouplement (5) dont chacun est constitué par une plaque présentant une paire de branches (4) qui sont espacées transversalement et délimitent un espace convenable pour recevoir entre elles au moins une ligne de distribution, lesdites branches (4) venant en prise sur les côtés des poutres porteuses (2), et ces branches (4) comprenant chacune une patte (14) qui fait saillie latéralement et dont chacune passe à travers une fente verticale (13) d'une poutre porteuse (2), caractérisé en ce que chaque patte (14) est munie d'un crochet de retenue (16) relié à cette patte (14), ce crochet de retenue (16) venant en prise sur ladite poutre porteuse (2) sur son côté dirigé à l'opposé de la branche correspondante (4), et par une paire de butées prévues sur chacune des branches (4), faisant saillie latéralement, dans des sens opposés, à partir du plan de la plaque de l'élément d'accouplement (5).

2. Plafond suspendu (1) tel que revendiqué dans la revendication 1, caractérisé en ce que les branches (4) de chaque élément d'accouplement (5) présentent sur leurs côtés intérieurs une encoche (7) servant à recevoir des rebords (9) d'un profilé en U pour ligne de distribution (8) destiné à une câble électrique de distribution, en particulier un câble en ruban (10), lesdits rebords (9) s'engageant par action élastique dans les encoches des branches (4) de l'élément d'accouplement (5).

3. Plafond suspendu (1) tel que revendiqué dans la revendication 2, caractérisé en ce qu'au moins une branche (4) présente sur la bord intérieur une partie inclinée (12) située au-dessous de l'encoche (7) destinée à recevoir un rebord (9) du profilé en U pour ligne de distribution (8).

4. Plafond suspendu (1) tel que revendiqué dans l'une quelconque des revendications précédentes 1, 2 ou 3, caractérisé en ce que la patte (14) présente au moins une languette (16) repliée hors de son plan, cette languette (16) constituant ledit crochet de retenue.

5. Plafond suspendu (1) tel que revendiqué dans l'une quelconque des revendications précédentes, caractérisé en ce que l'élément d'accouplement (5) est muni d'au poins un rebord de support de ligne de distribution de renfort (22) replié dans le plan horizontal, ce rebord convenant pour supporter d'autres lignes de distribution.

6. Plafond suspendu (1) tel que revendiqué dans l'une quelconque des revendications 2 à 5, caractérisé en ce qu'il est prévu un intervalle étroit (t) entre le profilé en U pour ligne de distribution (8) et une poutre porteuse (2), cet intervalle (t) donnant accès à un espace pour ligne de distribution, délimité par une branche (4) de l'élément d'accouplement (5), et qui est ininterrompu suivant une direction longitudinale.

7. Plafons suspendu (1) tel que revendiqué dans l'une quelconque des revendications précédentes, caractérisé en ce que l'élément d'accouplement (5) présente une tête (26) qui est munie de moyens de liaison (32) pour un organe de suspension (28).

8. Plafond suspendu (1) tel que revendiqué dans l'une quelconque des revendications 2—7, caractérisé en ce que le profilé en U pour ligne de distribution (8) peut également être fixé en position renversée entre les branches (4) de l'élément d'accouplement (5).

9. Elément d'accouplement (5) destiné à être utilisé dans un plafond suspendu (1) tel que revendiqué dans la revendication 1, constitué d'une plaque présentant une paire de branches (4) qui sont espacées transversalement et délimitent un espace convenable pour recevoir entre elles au moins une ligne de distribution, ces branches (4) présentant des bords latéraux destinés à venir en prise sur des côtés de poutres porteuses (2), et ces branches (4) comprenant chacune une patte (14) faisant saillie latéralement et convenant pour passer à travers une fente verticale (13) d'une poutre porteuse (2), caractérisé en ce que chaque patte (14) est munie d'au moins un crochet de retenue (16) destiné à verrouiller une poutre porteuse (2) sur l'élément d'accouplement (5), et par une paire de butées (19) sur chacune des branches (4), faisant saillie latéralement, dans des sens opposés, à partir du plan de la plaque de l'élément d'accouplement (5).

**Patentansprüche**

1. Hängedecke (1) mit einem Gitterwerk aus im Abstand parallel zueinander angeordneten Deckenträgern (2), von denen wenigstens zwei paarweise durch eine Kupplungsvorrichtung miteinander verbunden sind, die Kupplungselemente (5) aufweist, die jeweils aus einer Platte mit einem Paar von Schenkeln (4) besteht, die in Querrichtung im Abstand liegen und einen Raum abgrenzen, der zur Aufnahme wenigstens einer Versorgungsleitung dazwischen geeignet ist, wobei die Schenkel (4) an den Seiten der Deckenträger (2) angreifen und jeweils einen Vorsprung (14) besitzen, der seitlich vorsteht und jeweils durch einen Vertikalschlitz (13) eines Deckenträgers (2) geführt ist, dadurch gekennzeichnet, daß jeder Vorsprung (14) mit einem Widerhaken (16) versehen ist, der mit dem Vorsprung (14) verbunden ist und an dem letztgenannten Deckenträger (2) auf jener Seite angreift, die dem jeweiligen Schenkel (4) abgewandt ist, und daß zwei Anschläge an jedem Schenkel (4) seitlich von der Ebene der Platte des Kupplungselementes (5) in entgegengesetzten Richtungen vorstehen.

2. Hängedecke (1) nach Anspruch 1, dadurch gekennzeichnet, daß die Schenkel (4) eines jeden Kupplungselementes (5) auf der Innenseite einen Einschnitt (7) aufweisen, um die Flansche (9) eines Versorgungsleitungskanals (8) für ein elektrisches Versorgungskabel, insbesondere ein Bandkabel (10) aufzunehmen, wobei diese Flansche (9) durch Federwirkung in die Einschnitte der Schenkel (4) des Kupplungselementes (5) einrasten.

3. Hängedecke (1) nach Anspruch 2, dadurch gekennzeichnet, daß wenigstens ein Schenkel (4) am inneren Rand einen abgeschrägten Teil (12) unter dem Einschnitt (7) aufweist, um einen Flansch (9) eines Versorgungsleitungskanals (8) aufzunehmen.

4. Hängedecke (1) nach einem der vorhergehenden Ansprüche 1, 2 oder 3, dadurch gekennzeichnet, daß der Vorsprung (14) wenigstens einen Lappen (16) aufweist, der aus der Ebene des Vorsprungs abgebogen ist und den Widerhaken bildet.

5. Hängedecke (1) nach einem der vorhergehenden Ansprüche, dadurch gekennzeichnet, daß das Kupplungselement (5) mit wenigstens einem Trägerflansch (22) für die Versorgungsleitungen versehen ist, der in die Horizontalebene abgebogen ist, und daß der Flansch geeignet ist, weitere Versorgungsleitungen abzustützen.

6. Hängedecke (1) nach einem der Ansprüche 2 bis 5, dadurch gekennzeichnet, daß ein schmaler Spalt (t) zwischen dem Versorgungsleitungskanal (8) und einem Deckenträger (2) vorgesehen ist, und daß dieser Spalt (t) einen Versorgungsleitungsraum zugänglich macht, der durch einen Schenkel (4) des Kupplungselementes (5) begrenzt und in Längsrichtung ununterbrochen ist.

7. Hängedecke (1) nach einem der vorhergehenden Ansprüche, dadurch gekennzeichnet, daß das Kupplungselement (5) einen Kopf (26) aufweist, der mit einer Verbindungsvorrichtung (32) für einen Aufhänger (28) versehen ist.

8. Hängedecke (1) nach einem der Ansprüche 2 bis 7, dadurch gekennzeichnet, daß der Versorgungsleitungskanal (8) auch in umgekehrter Lage zwischen den Schenkeln (4) des Kupplungselementes (5) festlegbar ist.

9. Kupplungselement (5) zur Benutzung bei einer Hängedecke (1) gemäß Anspruch 1, bestehend aus einer Platte mit zwei Schenkeln (4), die in Querrichtung im Abstand zueinander liegen und einen Raum abgrenzen, der zur Aufnahme wenigstens einer Versorgungsleitung dazwischen geeignet ist, wobei die Schenkel (4) Seitenränder aufweisen, die an den Deckenträgern (2) angreifen und jeweils einen Vorsprung (14) besitzen, der seitlich vorsteht und durch einen Vertikalschlitz (13) eines Deckenträgers (2) einsteckbar ist, dadurch gekennzeichnet, daß jeder Vorsprung (14) mit wenigstens einem Widerhaken (16) versehen ist, um einen Deckenträger (2) mit einem Kupplungselement (5) zu verriegeln, und daß zwei Anschläge (19) an jedem Schenkel (4) seitlich von der Ebene der Platte des Kupplungselementes (5) in entgegengesetzten Richtungen vorstehen.

0 037 615

FIG.1

FIG.2

1

FIG.4

FIG.3

FIG.5